# EUROPÄISCHE PATENTSCHRIFT

(11) **EP 2 720 036 B1**
(45) Veröffentlichungstag und Bekanntmachung des Hinweises auf die Patenterteilung: **28.12.2016**
(21) Anmeldenummer: 13004521.4
(22) Anmeldetag: 16.09.2013
(51) Int. Cl.: G01N 27/92, B65G 29/02, G01N 35/04

(54) **Vorrichtung zur Prüfung von Erzeugnissen**
Device for inspecting products
Dispositif de contrôle de produits

(30) Priorität: 12.10.2012 DE 202012009944 U
(43) Veröffentlichungstag der Anmeldung: 16.04.2014
(73) Patentinhaber: Seidenader Maschinenbau GmbH, 85570 Markt Schwaben (DE)
(72) Erfinder: Ringer, Fabrice, 85664 Hohenlinden (DE); Baumgartner, Hans, 83324 Ruhpolding (DE)
(74) Vertreter: Laufhütte, Dieter

(56) Entgegenhaltungen:
- EP-A1- 0 324 046
- EP-A1- 2 460 747
- DE-U1-202009 010 781
- FR-A1- 2 499 952
- JP-A- S56 133 654

## Beschreibung

Die Erfindung betrifft eine Vorrichtung zur Prüfung von Erzeugnissen nach dem Oberbegriff des Anspruchs 1.

Zur Prüfung von Erzeugnissen, wie beispielsweise Ampullen, Flaschen, Zylinderampullen, Vials oder dergleichen werden üblicherweise Inspektionsmaschinen eingesetzt. Die Inspektion erfolgt in der Regel optisch. Bei flüssigen, gefriergetrockneten und opaken Produkten wird in einer Maschine die Partikelinspektion und die Inspektion von kosmetischen Defekten durchgeführt. Bei diesen optischen Inspektionsmethoden bei flüssigen Produkten können Partikel, Schwebeteilchen, Fasern, das Glas und der Füllstand inspiziert werden. Bei gefriergetrockneten Produkten kann das sogenannte "Meltback", ein eingefallener Kuchen, Verfärbungen, Verunreinigungen an Kuchen, nicht gefriergetrocknetes Produkt und der Füllstand überprüft werden. Für Vials können Lage und Farbe der Flip-Off-Kappe, Farbe der Bördelkappe, das Vorhandensein eines gegebenenfalls vorgesehenen Gummistopfens, die Qualität der Bördelung, Dellen und Kratzer in der Bördelkappe, Risse und Kratzer in der Seitenwand und im Boden sowie Verschmutzungen festgestellt werden.

Bei Ampullen kann beispielsweise mittels der optischen Methode eine Deformierung am Ampullenspieß, ein sogenannter Schwarzbrenner, die Farbringcodierung, Kratzer an der Seitenwand und am Boden sowie Verschmutzungen festgestellt werden. Auch wenn die optischen Inspektionsverfahren eine Vielzahl von verläßlichen Informationen bezüglich der zu prüfenden Erzeugnisse liefern, sind einige Ergebnisse der Inspektion nicht eindeutig. So kann beispielsweise nicht eindeutig festgestellt werden, ob in einer Behälterwand lediglich ein Kratzer oder aber sogar ein Riß vorhanden ist. Beides wird in der optischen Methode als gleicher Fehler festgestellt. Bei dem Erzeugnis mag aber beispielsweise ein Kratzer in der Wandung oder am Boden hinnehmbar sein, während ein Riß zum notwendigen Ausschleusen des Erzeugnisses führen muss.

Um Kratzer und Risse sicher voneinander unterscheiden zu können, ist es bereits bekannt geworden, das Erzeugnis nach der optischen Prüfung entweder einer Vakuumprüfung oder alternativ einer Hochspannungsprüfung zu unterziehen. Während bei einer Vakuumprüfung die Dichtigkeit des Behältnisses und damit das Vorhandensein einer Risses überprüft wird, wird bei einer Hochspannungsprüfung das Erzeugnis zwischen zwei Elektroden, das heißt zwischen einer Masseelektrode und einer Spitzenelektrode, angeordnet. Schlägt bei Anlegen der Hochspannung der Funke durch, liegt ein Riß vor, so dass das Erzeugnis ausgesondert werden kann. Bei den bislang bekannten Zusatzmodulen zur Hochspannungsprüfung hat sich das Handling der zu prüfenden Erzeugnisse als schwierig erwiesen. Die jeweils zu prüfenden, Erzeugnisse müssen einzeln aufgenommen und in der Prüfposition zwischen den Elektroden gedreht werden. Hierzu waren in der Vergangenheit recht aufwendige und den gesamten Inspektionsprozeß verlangsamende Konstruktionen bekannt.

Dokument JP56133654 beschreibt eine Prüfvorrichtung für Ampullen, bei der zu prüfende Ampullen in horizontaler Ausrichtung über eine Transportschnecke zwei hintereinander angeordneten Transportsternen zugeführt werden, um die Prüflinge weiter an ein Inspektionskarussel zu übergeben. Während des gesamten Transport- und Prüfvorgangs wird die horizontale Ausrichtung der zu prüfenden Ampullen nicht verändert.

Dokument FR2499952 beschreibt eine Anordnung von zwei Transportsternen zum Kippen bzw. Aufrichten von Flaschen in einer Getränkeabfüllanlage. Die Flaschen werden dabei durch die Schrägstellung der beiden Transportsterne zueinander und der auf die Flaschen wirkende Schwerkraft gekippt bzw. aufgerichtet.

Aus der DE 20 2009 010 781 U ist nun bereits eine Vorrichtung zur Prüfung von Erzeugnissen, insbesondere von Ampullen und Flaschen bekannt, bei der ein drehbar antreibbares Inspektionskarussel vorgesehen ist, in welchem auf Umfang Aufnahmewippen zur rotierbaren Aufnahme der Erzeugnisse angeordnet sind. Die Erzeugnisse werden dabei von den Aufnahmewippen von einer vertikalen Aufnahmeposition in eine zumindest waagerechte Prüfposition verschwenkt.

Dieser vorbekannte Verschwenkmechanismus ist konstruktiv aufwendig und führt zu einem vergleichsweise hohem Wartungsaufwand.

Aufgabe der Erfindung ist es, eine gattungsgemäße Vorrichtung zur Prüfung von Erzeugnissen derart weiterzubilden, dass die einer optischen Inspektion nachgeschaltete Hochspannungsprüfung der zu prüfenden Erzeugnisse in einfacher und sicherer Weise erfolgen kann, wobei der An- und Abtransport der zu inspizierenden Erzeugnisse vereinfacht werden soll.

Erfindungsgemäß wird diese Aufgabe durch die Kombination der Merkmale des Anspruchs 1 gelöst. Demnach ist eine Vorrichtung zur Prüfung von Erzeugnissen, insbesondere von Ampullen, Flaschen und dergleichen, mit Mitteln zur Bewegung der zu prüfenden Erzeugnisse und mit Erfassungsmitteln zur Hochspannungsprüfung für die Erzeugnisse geschaffen, wobei diese ein drehbar antreibbares Inspektionskarussel aufweist. Erfindungsgemäß sind die Erzeugnisse mittels mindestens zwei schräg zueinander angeordneter rotierenden Transportsternen von einer vertikalen Aufnahmeposition, in der die Erzeugnisse antransportiert werden, in eine zumindest waagerechte Prüfposition überführbar. Aus dieser waagerechten Prüfposition sind sie wiederum über zwei schräg zueinander angeordnete rotierende Transportsterne in eine vertikale Abgabeposition überführbar.

Über dieses erfindungsgemäß vorgesehene Inspektionskarussel mit entsprechender Zu- und Abführung können die Erzeugnisse auf ihrem Transportweg, der der optischen Inspektion nachgeschaltet ist, schnell und kontinuierlich übernommen werden und nach der Lageveränderung vom senkrechten in den waagerechten Zustand durch die schräg zueinander angeordneten rotierenden Transportsterne in die horizontale Prüfposition im Inspektionskarussel übergeben werden. In dieser horizontalen Prüfposition werden sie überprüft, bevor sie wieder in eine vertikale Abgabeposition verschwenkt werden, um dann, je nach Prüfergebnis entweder als defektes Erzeugnis ausgeschleust zu werden oder als sogenanntes Gutprodukt nach bestandener Hochspannungsprüfung ausgeschleust und anschließend abgepackt zu werden.

Bevorzugte Ausgestaltungen der Erfindung ergeben sich aus den sich an den Hauptanspruch anschließenden Unteransprüchen.

Demnach kann dem Inspektionskarussel ein bezogen auf die Zuführebene der Erzeugnisse senkrecht angeordneter Transportstern zugeordnet sein.

Besonders vorteilhaft kann ein erster Transportstern die kontinuierlich angeförderten vertikal stehenden Erzeugnisse aufnehmen und aufgrund seiner Schrägstellung schräg an den benachbart angeordneten Transportstern übergeben, der diese Erzeugnisse durch seine noch weiter geneigte Schrägstellung noch weiter kippt und schließlich an den senkrecht zur Zuführebene angeordneten weiteren Transportstern übergeben kann, der die Erzeugnisse nun in waagerechter Position an das Inspektionskarussel übergibt. Die Erzeugnisse können nach Durchlaufen des Inspektionskarussels an einen ebenfalls senkrecht zur Zuführebene angeordneten Transportstern übergeben werden, von dem die Erzeugnisse dann wiederum durch weiteren Transport über zwei schräg angeordnete Transportsterne vertikal aufgerichtet abgegeben werden können. Durch die jeweils schräg zueinander angeordneten Transportstern kann eine kontinuierliche Übernahme und Weitergabe der Erzeugnisse in sehr einfacher, kompakter und wenig störanfälliger Bauweise erzielt werden.

Die Erzeugnisse können dann im Inspektionskarussel zwischen verschiebbaren unteren und oberen Haltern aufnehmbar sein. Dabei können die Halter vorteilhaft als Rotationsachsenunterteile und Rotationsachsenoberteile ausgebildet sein, zwischen denen die Erzeugnisse einkoppelbar, das heißt beispielsweise einklemmbar, sind.

Die Erzeugnisse sind üblicherweise im eingekoppelten Zustand zwischen den Rotationsachsenunterteilen und den Rotationsachsenoberteilen um ihre eigene Achse rotierbar.

Die Elektroden zur Hochspannungsprüfung und vorzugsweise jeweils die zugeordnete Masse- und Nadelelektroden, sind im Inspektionskarussel angeordnet, so dass die Erzeugnisse während des Transports durch den Inspektionsstand an den jeweiligen Elektroden vorbeigeführt werden.

Die jeweiligen Halter, das heißt die Rotationsachsenunterteile und Rotationsachsenoberteile sind vorteilhaft jeweils über eine Hubkurvenverstellung verschiebbar im Inspektionskarussel gelagert, dabei kann eine erste Hubkurvenverstellung eine Zustellung der Rotationsachsenunterteile und eine zweite Hubkurvenverstellung eine Zustellung der Rotationsachsenoberteile bewirken.

Eine dritte Hubkurvenverstellung kann vorgesehen sein, um eine von der Erzeugnisgröße abhängige Voreinstellung der Rotationsachenoberteile zu ermöglichen. Hierdurch können bei Bedarf verschieden große Erzeugnisse im Inspektionskarussel aufgenommen werden.

Besonders vorteilhaft sind die Transportsterne als Saugsterne ausgebildet. Hierdurch können die entsprechenden Erzeugnisse, also beispielsweise die Ampullen oder Flaschen, sicher im Transportstern während ihres Transports gehalten werden, in sehr sicherer Weise aufgenommen und auch wieder abgegeben werden.

Zur Einleitung der Eigenrotation der im Inspektionsstern geprüften Erzeugnisse kann vorzugsweise ein Riemenantrieb vorgesehen sein.

Vorteilhaft können die zu inspizierenden Erzeugnisse kontinuierlich über eine Transportschnecke der Prüfvorrichtung zugeführt werden. In gleicher Weise können die aus der Prüfvorrichtung wieder ausgeschleusten Erzeugnisse kontinuierlich mit einer entsprechenden zweiten Transportschnecke abtransportiert werden.

Weitere Merkmale, Einzelheiten und Vorteile der Erfindung werden anhand eines in der Zeichnung dargestellten Ausführungsbeispiels näher erläutert. Es zeigen:
- Figur 1:: eine perspektivische Ansicht einer Ausführungsform der erfindungsgemäßen Vorrichtung in vereinfachter Darstellung,
- Figur 2:: eine Detaildarstellung der Figur 1, die teilweise geschnitten ist,
- Figur 3:: eine Seitenansicht der Vorrichtung gemäß Figur 1,
- Figur 4:: eine weitere perspektivische Darstellung der Figur 1 aus einem Blickwinkel,
- Figur 5:: eine Seitenansicht des Inspektionskarussels mit den Elektroden zur Spannungsprüfung und
- Figur 6:: eine perspektivische Ansicht der Vorrichtung nach Figur 1 von der Rückseite.

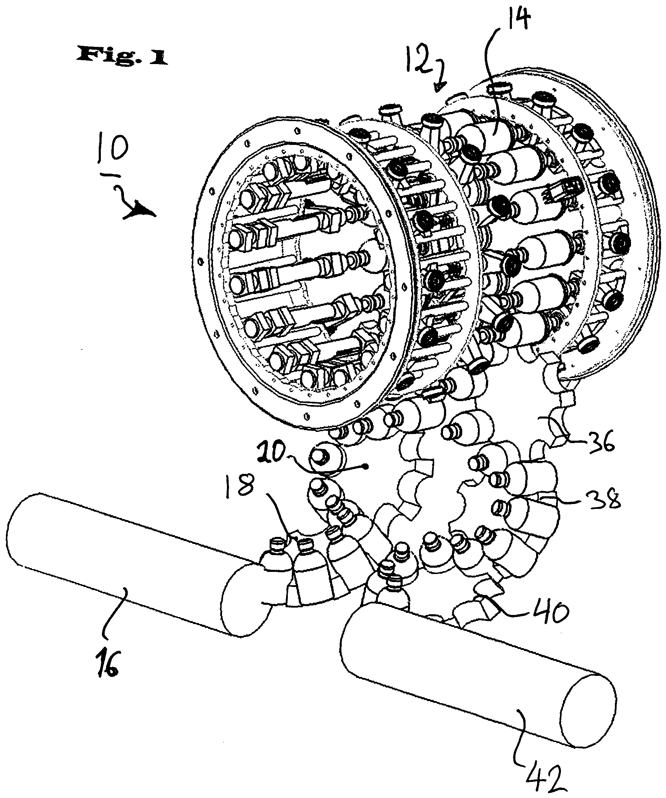

In Figur 1 ist eine Vorrichtung 10 zur Prüfung von Erzeugnissen, insbesondere von Ampullen, Zylinderampullen, Flaschen, Vials oder dergleichen gezeigt. Kernstück der Vorrichtung ist ein Inspektionskarussel 12, in welches die zu prüfenden Erzeugnisse 14 einsetzbar sind. Im hier dargestellten Ausführungsbeispiel sind die Erzeugnisse 14 Ampullen. Wie aus der Figur 1 ersichtlich, werden die Ampullen über eine hier nur schematisch dargestellte Transportschnecke 16 senkrecht stehend antransportiert.

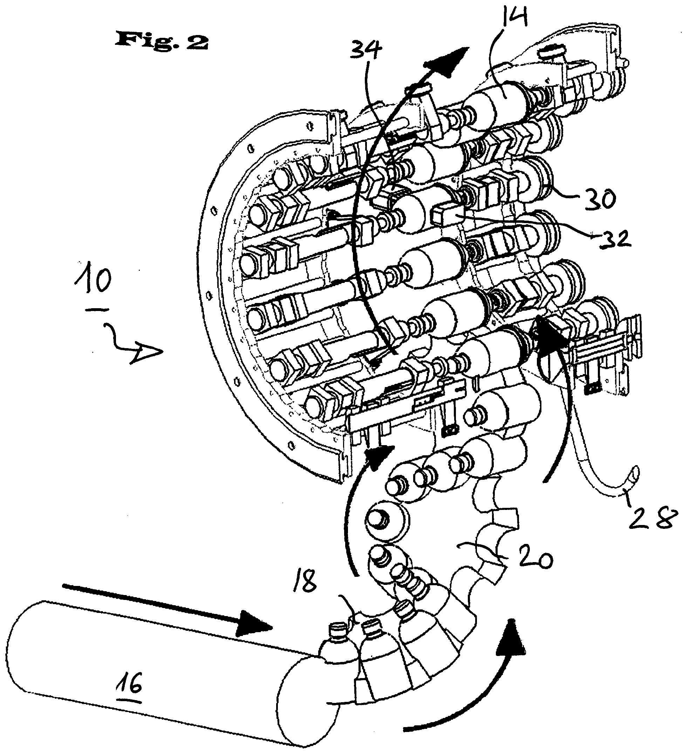

Die senkrecht vertikal antransportierten Ampullen 14 werden von einem ersten schräg angeordneten rotierenden Transportstern 18, der mit einem nicht näher dargestellten Saugmechanismus zur Festlegung der Ampullen 14 während des Transports ausgebildet ist, übernommen und an einen weiteren noch weiter schräg stehenden weiteren grundsätzlich gleich aufgebauten Transportstern 20 übergeben. Von dort aus werden sie an einen dritten ebenfalls gleich aufgebauten senkrecht ausgerichteten Transportstern 22 übergeben. Die Transportrichtung der übergebenen Ampullen 14 wird in der Figur 2 durch die Pfeile angegeben.

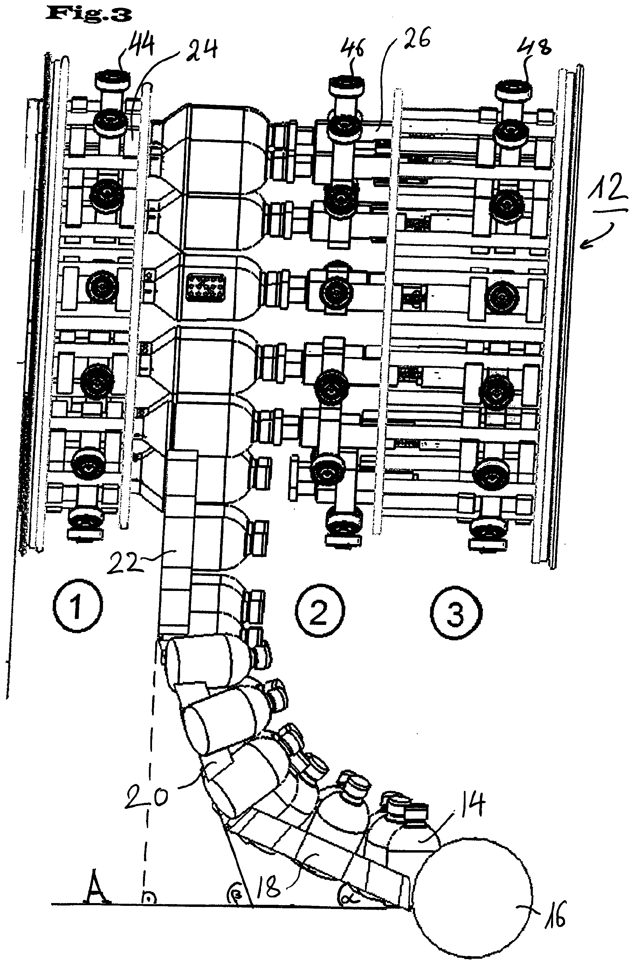

Während des Transports über die Transportsterne 18 und 20 werden die vertikal antransportierten Ampullen 14 in ein horizontale Abgabeposition überführt. Die Schrägstellung der Transportsterne 18, 20 zur Bezugsebene A ergibt sich aus Fig. 3. Der erste Transportstern 18 ist um einen Winkel α gegenüber der Bezugsebene A angestellt, wobei 0° < α < 45° ist. Der zweite Transportstern 20 ist um einen Winkel β gegenüber der Bezugsebene A angestellt, wobei 45° < β <90° ist.

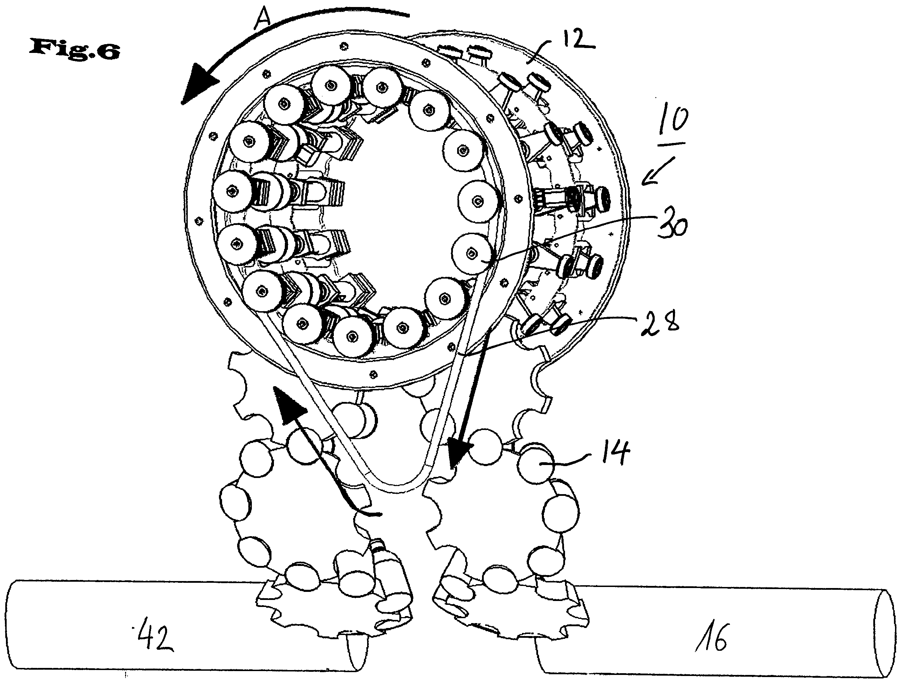

Vom dritten Transportstern 22 aus werden die Ampullen 14 an das Inspektionskarussel 12 übergeben. Hierzu werden die Erzeugnisse im Inspektionskarussel zwischen verschiebbaren unteren Haltern 24 und oberen Haltern 26 aufgenommen. Die unteren Halter und oberen Halter 24 und 26 sind als Rotationsachsenunterteile und Rotationsachsenoberteile ausgebildet, die drehbar im Inspektionskarussel 12 gehalten sind. Über diese drehbaren Halter 24 und 26 können die Ampullen um ihre eigene Achse gedreht werden. Hierzu ist ein Riemenantrieb mit einem Riemen 28 vorgesehen, über den Riemenscheiben 30 in Rotation versetzbar sind. Wie den Pfeilen in Figur 6 zu entnehmen ist, werden die einzelnen Ampullen 14 mit Hilfe des als Rundriemen ausgebildeten Riemens 28 gegen die Transportrichtung, die mit dem Pfeil A angegeben ist, in Rotation versetzt.

Durch den tangentialen Kontakt zwischen dem Riemen und den Riemenscheiben 30 wird erreicht, dass die Rotation sanft und langsam anläuft, so dass der Schlupf der in Rotation versetzten Ampullen 14 klein bleibt. Der Riemen 28 wird in hier nicht näher dargestellter Weise separat angetrieben.

Während sich die Ampullen 14 im Inspektionskarussel 12 befinden, werden diese aufgrund der Rotation um ihre eigene Achse um 360° gedreht und somit vollständig inspiziert. Die Seiten der Ampullen 14 sind im Inspektionskarussel von außen und innen frei zugänglich. Somit kann im Inspektionskarussel 12 eine Inspektion der kompletten Seitenwand und des Kopfbereichs (Spieß) der jeweiligen Ampulle 14 realisiert werden.

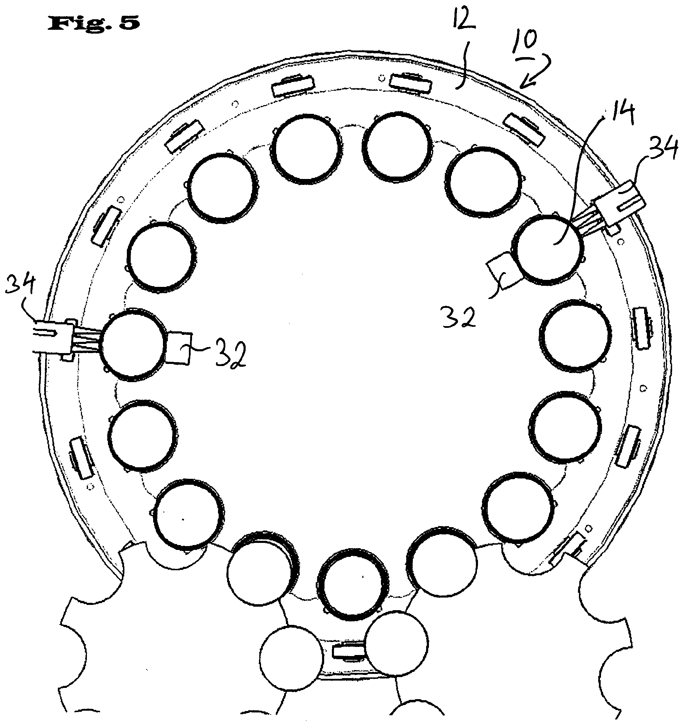

In Figur 5 ist gezeigt, wie hier entsprechend zwei Masseelektroden 32 und Nadelelektroden 34 angeordnet sind. Aufgrund der Kreisanordnung ist ein kompakter Aufbau der Masse- und Nadelelektroden möglich. Im hier dargestellten Ausführungsbeispiel sind die Masseelektroden innen im Inspektionskarussel 12 vorgesehen, während die Nadelelektroden außen angeordnet sind.

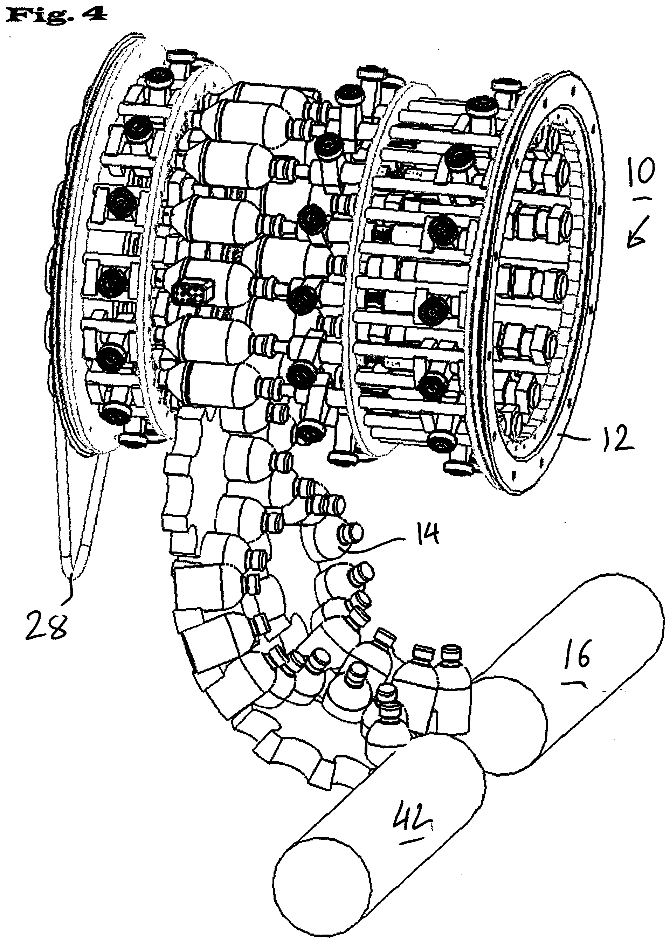

Wie insbesondere den Figuren 1, 4 und 6 zu entnehmen ist, werden die Ampullen 14 nach der Hochspannungsprüfung mittels der Masseelektrode 32 bzw. der Nadelelektrode 34 wieder aus dem Inspektionskarussel 12 ausgeschleust. Hierzu sind in ähnlicher Weise wie zuvor beim Einschleusen der Ampullen 14 beschrieben, wieder drei Transportsterne 36, 38 und 40 vorgesehen, wobei diese wieder als Saugsterne aufgebaut sind, wie es bereits anhand der Transportsterne 18, 20 und 22 zuvor beschrieben wurde. Der Transportstern 36, an dem die Ampullen 14 aus dem Inspektionskarussel übergeben werden, ist wiederum senkrecht zur Ebene A (vgl. Figur 3) ausgerichtet. Die Transportsterne 38 und 40 weisen wieder Schrägstellungen auf, wie sie anhand der Transportsterne 20 und 18 beschrieben wurden. Somit können die vom Inspektionskarussel 12 abtransportierten Ampullen 14 von der waagerechten Position in die vertikale Position übertragen werden. In vertikaler Position werden sie dann von einer Transportschnecke 42, die in Figur 1 bzw. Figur 6 nur schematisch dargestellt ist, abtransportiert.

Die im Inspektionskarussel 12 angeordneten Halter 24 und 26 sind längsverschieblich gelagert. Sie weisen eine sogenannte Hubkurvenverstellung auf, bei der über entsprechende hier nicht näher dargestellte Kulissen entsprechende an den unteren Haltern 24 bzw. oberen Haltern 26 angeordnete Kulissenrollen 44 bzw. 46 und 48 entlang gleiten. Über diese Hubkurvenverstellung können Hubkurven für das Einsetzen, das Herausnehmen und den Formatwechsel für die zu inspizierenden Erzeugnisse bzw. Ampullen 14 vorgesehen werden. Die Hubkurve 1 (Figur 3) ermöglicht dabei eine Zustellung der unteren Halter 24, das heißt der Rotationsachsenunterteile 24, um eventuell vorhandene Fehlstellungen, die durch die Übergabe der Ampullen 14 mittels der Transportsterne 18 bis 22 entstanden sind, auszugleichen. Die Zustellung wird hier in einem Bereich von ca. 2 - 8 mm liegen.

Über die Hubkurve 2, das heißt die entsprechenden Kulissenräder 46 und die zugehörige hier nicht näher dargestellte Kulisse wird eine Zustellung der oberen Halter 26, das heißt der Rotationsachsenoberteile 26 erreicht. Diese wird dazu verwendet, dass die Erzeugnisse 14 ins Inspektionskarussel eingesetzt und aus diesem wieder herausgenommen werden können. Hierzu bewegen sich die Hubkurven 1 und 2 zunächst linear voneinander weg, um die Ampullen 14 aufzunehmen und während des Einsetzens der Ampullen in das Inspektionskarussel 12 aufeinander zu. Die Hubkurve 2 vollzieht hierbei immer eine feste Bewegung, nämlich die sogenannte Öffnungs- und Schließbewegung, die eine Längsverschiebung von ca. 10 bis 20 mm bedingt.

Schließlich ist mit 3 (Figur 3) die dritte Hubkurve bezeichnet, die auf das Zusammenwirken der Kulissenräder 48 mit der hier nicht näher dargestellten Kulissenführung erfolgt. Diese Hubkurve ist für die format- und produktabhängige Höhenvoreinstellung der oberen Halter 26, das heißt der Rotationsachsenoberteile 26 vorgesehen. Hierdurch können verschiedene Produkthöhen abgedeckt werden.

Mit der vorgenannten Prüfvorrichtung können somit undichte Erzeugnisse 12 mittels Hochspannung auf kleinstem Raum mit einem neuen mechanischen Konzept auf Undichtigkeit überprüft werden. Aufgrund der exakten Aufnahme der Ampullen im Inspektionskarussel durch die unteren und oberen Halter kann das jeweils zu untersuchende Erzeugnis genau definiert positioniert werden. Die Rotationsachse entspricht hier der Produktachse, so dass konstruktionsbedingt eine weitgehend toleranzfreie genaue Positionierung erreicht wird. Erfindungsgemäß werden die Produkte auch durch einen Antrieb der Rotationsachsen unmittelbar und nicht über Andrücken der Produkte an ein tangential vorbeigeführtes Band erzielt. Hierdurch werden die Erzeugnisse zusätzlich geschont.

## Patentansprüche

1. Vorrichtung zur Prüfung von Erzeugnissen (14), insbesondere von Ampullen, Flaschen und dergleichen, mit Mitteln (12) zur Bewegung der zu prüfenden Erzeugnisse (14) und mit Erfassungsmitteln zur Hochspannungsprüfung für die Erzeugnisse (14), wobei sie ein drehbar antreibbares Inspektionskarussel (12) und mindestens zwei Transportsterne (18,20;38,40) aufweist,
**dadurch gekennzeichnet, dass** die mindestens zwei Transportsterne (18,20;38,40) als Saugsterne ausgebildet sind und die mindestens zwei Transportsterne (18,20;38,40) schräg zueinander angeordnet sind, und dass die Erzeugnisse (14) mittels mindestens zwei schräg zueinander angeordneten, rotierenden, als Saugsterne ausgebiledeten Transportsternen (18, 20; 38, 40) von einer vertikalen Aufnahmeposition in eine zumindest waagerechte Prüfposition und umgekehrt überführbar sind.

2. Vorrichtung nach Anspruch 1, **dadurch gekennzeichnet, dass** zur Einleitung der Eigenrotation der im Inspektionsstern geprüften Erzeugnisse (14) ein Riemenantrieb vorgesehen ist.

3. Vorrichtung nach Anspruch 1 oder 2, **dadurch gekennzeichnet, dass** dem Inspektionskarussel ein bezogen auf die Zuführebene der Erzeugnisse (14) senkrecht angeordneter Transportstern (22) zugeordnet ist.

4. Vorrichtung nach einem der vorhergehenden Ansprüche, **dadurch gekennzeichnet, dass** der erste Transportstern (18) derart angeordnet ist die vertikal stehenden Erzeugnisse (14) aufzunehmen und aufgrund seiner Schrägstellung schräg an den benachbart angeordneten Transportstern (20) zu übergeben, der angeordnet ist diese Erzeugnisse (14) durch seine noch weiter geneigte Schrägstellung noch weiter zu kippen und schließlich an den senkrecht zur Zuführebene angeordneten Transportstern (22) zu übergeben, der angeordnet ist die Erzeugnisse (14) nun in waagerechter Position an das Inspektionskarussel (12) zu übergeben und dass die Vorrichtung ausgebildet ist die Erzeugnisse (14) nach Durchlaufen des Inspektionskarussels (12) an einen ebenfalls senkrecht zur Zuführebene angeordneten dritten Transportstern (36) zu übergeben, wobei der dritte Transportstern (36) derart angeordnet ist die Erzeugnisse (14) wiederum durch weiteren Transport über zwei schräg angeordnete vierte und fünfte Transportsterne (38, 40) vertikal aufgerichtet abzugeben.

5. Vorrichtung nach einem der vorhergehenden Ansprüche, **dadurch gekennzeichnet, dass** das Inspektionskarussel verschiebbare untere und obere Halter (24,26) umfasst und die Erzeugnisse (14) im Inspektionskarussel zwischen den verschiebbaren unteren und oberen Haltern (24, 26) aufnehmbar sind.

6. Vorrichtung nach Anspruch 5, **dadurch gekennzeichnet, dass** die jeweiligen Halter (24, 26) als Rotationsachsenunterteile und Rotationsachsenoberteile ausgebildet sind, zwischen denen die Erzeugnisse (14) einkoppelbar sind.

7. Vorrichtung nach Anspruch 6, **dadurch gekennzeichnet, dass** die Erzeugnisse (14) im eingekoppelten Zustand zwischen den Rotationsachsenunterteilen und den Rotationsachsenoberteilen um ihre eigene Achse rotierbar sind.

8. Vorrichtung nach einem der vorhergehenden Ansprüche, **dadurch gekennzeichnet, dass** im Inspektionskarussel (12) Elektroden, vorzugsweise jeweils zugeordnete Masse- und Nadelelektroden (32, 34), angeordnet sind, über die die Erzeugnisse (14) prüfbar sind.

9. Vorrichtung nach einem der vorhergehenden Ansprüche 5-8, **dadurch gekennzeichnet, dass** die jeweiligen Halter (24, 26) über eine Hubkurvenverstellung verschiebbar im Inspektionskarussel (12) gelagert sind.

10. Vorrichtung nach Anspruch 9, **dadurch gekennzeichnet, dass** eine erste Hubkurvenverstellung eine Zustellung der Rotationsachsenunterteile und eine zweite Hubkurvenverstellung eine Zustellung der Rotationsachsenoberteile bewirkt.

11. Vorrichtung nach Anspruch 10, **dadurch gekennzeichnet, dass** eine dritte Hubkurbenverstellung vorhanden ist, die eine von der Erzeugnisgröße abhängige Voreinstellung der Rotationsachenoberteile ermöglicht.

12. Vorrichtung nach einem der vorhergehenden Ansprüche, **dadurch gekennzeichnet, dass** eine Transportschnecke (16) vorgesehen ist, über die die Erzeugnisse (14) in vertikaler Aufnahmeposition antransportiert und eine Transportschnecke (42) vorgesehen ist, über die die Erzeugnisse (14) in vertikaler Abgabeposition abtransportiert werden.

## Claims

1. An apparatus for inspecting products (14), in particular ampoules, bottles and the like, having means (12) for moving the products (14) to be inspected and having detection means for a high-voltage test for the products (14), wherein said apparatus has a rotatably drivable inspection carousel (12) and at least two transport hubs (18, 20; 38, 40),
**characterized in that**
the at least two transport hubs (18, 20; 38, 40) are configured as suction hubs and the at least two transport hubs (18, 20; 38, 40) are arranged at a slant with respect to one another; and **in that**
the products (14) can be moved by means of at least two rotating transport hubs (18, 20; 38, 40) arranged at a slant with respect to one another and configured as suction hubs from a vertical reception position into an at least horizontal test position, and vice versa.

2. An apparatus in accordance with claim 1, **characterized in that** a belt drive is provided to initiate the rotation of the products (14) inspected in the inspection hub.

3. An apparatus in accordance with claim 1 or claim 2, **characterized in that** a transport hub (22) arranged perpendicular with respect to the supply plane of the products (14) is associated with the inspection carousel.

4. An apparatus in accordance with one of the preceding claims, **characterized in that** the first transport hub (18) is arranged in such a way to receive the vertically standing products (14) and to transfer them due to its slanted position at a slant to the transport hub (20) which is arranged adjacent and which is arranged to tilt these products (14) even further due to its even further inclined slanted position and finally to transfer them to the transport hub (22) arranged perpendicular with respect to the supply plane, which is arranged to now transfer the products (14) in the horizontal position to the inspection carousel (12); and **in that** the apparatus is configured to transfer the products (14) to a third transport hub (36) likewise arranged perpendicular to the supply plane after running through the inspection carousel (12), with the third transport hub (36) being arranged in such a way in order in turn to dispense the products (14) in a vertically upright manner by a further transport via two fourth and fifth transport hubs (38, 40) arranged at a slant.

5. An apparatus in accordance with one of the preceding claims, **characterized in that** the inspection carousel comprises displaceable lower and upper holders (24, 26) and the products (14) can be received in the inspection carousel between the displaceable lower and upper holders (24, 26).

6. An apparatus in accordance with claim 5, **characterized in that** the respective holders (24, 26) are configured as lower parts of the rotational axle and as upper parts of the rotational axle between which the products (14) can be coupled.

7. An apparatus in accordance with claim 6, **characterized in that** the products are rotatable about their own axis in the coupled state between the lower parts of the rotational axle and the upper parts of the rotational axle.

8. An apparatus in accordance with one of the preceding claims, **characterized in that** electrodes, preferably respectively associated ground electrodes and needle electrodes (32, 34), are arranged in the inspection carousel (12) and the products (14) can be tested via them.

9. An apparatus in accordance with one of the preceding claims 5 to 8, **characterized in that** the respective holders (24, 26) are displaceably supported via a lifting arc adjustment in the inspection carousel (12).

10. An apparatus in accordance with claim 9, **characterized in that** a first lifting arc adjustment effects a delivery of the lower parts of the rotational axle and a second lifting arc adjustment effects a delivery of the upper parts of the rotational axle.

11. An apparatus in accordance with claim 10, **characterized in that** a third lifting arc adjustment is present which allows a presetting of the upper parts of the rotational axle dependent on the product size.

12. An apparatus in accordance with one of the preceding claims, **characterized in that** a screw conveyor (16) is provided via which the products (14) are transported inward in a vertical reception position and a screw conveyor (42) is provided via which the products (14) can be transported off in a vertical dispensing position.

## Revendications

1. Dispositif de contrôle de produits (14), en particulier d'ampoules, de bouteilles et similaires, comprenant des moyens (12) destinés à déplacer les produits (14) à contrôler et comprenant des moyens de détection destinés à l'essai à haute tension pour les produits (14), le dispositif comportant un carrousel d'inspection (12) pouvant être entraîné en rotation et au moins deux étoiles de transport (18, 20 ; 38, 40),
**caractérisé en ce que**
les au moins deux étoiles de transport (18, 20 ; 38, 40) sont réalisées sous la forme d'étoiles à succion et les au moins deux étoiles de transport (18, 20 ; 38, 40) sont disposées obliquement l'une par rapport à l'autre et **en ce que**
les produits (14) peuvent être transférés d'une position de réception verticale en une position de contrôle au moins horizontale et vice versa au moyen d'au moins deux étoiles de transport (18, 20 ; 38, 40) rotatives, disposées obliquement l'une par rapport à l'autre et réalisées sous la forme d'étoiles à succion.

2. Dispositif selon la revendication 1, **caractérisé en ce qu'**un entraînement par courroie est prévu pour engager la rotation propre des produits (14) contrôlés dans l'étoile d'inspection.

3. Dispositif selon la revendication 1 ou 2, **caractérisé en ce qu'**une étoile de transport (22) disposée perpendiculairement au plan d'acheminement des produits (14) est associée au carrousel d'inspection.

4. Dispositif selon l'une des revendications précédentes, **caractérisé en ce que** la première étoile de transport (18) est disposée de manière à recevoir les produits (14) se présentant verticalement et à les transmettre, en raison de sa position oblique, obliquement à l'étoile de transport (20) disposée adjacente, qui est disposée de manière à basculer encore plus ces produits (14) par sa position oblique encore plus inclinée et les transmettre enfin à l'étoile de transport (22) disposée perpendiculairement au plan d'acheminement, qui est disposée de manière à transmettre les produits (14) à présent en position horizontale au carrousel d'inspection (12) et **en ce que** le dispositif est conçu pour transmettre les produits (14), après le passage par le carrousel d'inspection (12) à une troisième étoile de transport (36) disposée également perpendiculairement au plan d'acheminement, la troisième étoile de transport (36) étant disposée de manière à évacuer les produits (14), redressés verticalement, encore une fois par un transport supplémentaire par le biais de deux, une quatrième et une cinquième, étoiles de transport (38, 40) disposées obliquement.

5. Dispositif selon l'une des revendications précédentes, **caractérisé en ce que** le carrousel d'inspection comprend des éléments de retenue (24, 26) inférieurs et supérieurs mobiles et les produits (14) dans le carrousel d'inspection peuvent être reçus entre les éléments de retenue (24, 26) inférieurs et supérieurs mobiles.

6. Dispositif selon la revendication 5, **caractérisé en ce que** les éléments de retenue (24, 26) respectifs sont réalisés sous la forme de parties inférieures d'axe de rotation et de parties supérieures d'axe de rotation, entre lesquelles les produits (14) peuvent être couplés.

7. Dispositif selon la revendication 6, **caractérisé en ce que** les produits (14), à l'état couplé entre les parties inférieures d'axe de rotation et les parties supérieures d'axe de rotation, sont rotatifs sur leur propre axe.

8. Dispositif selon l'une des revendications précédentes, **caractérisé en ce que**, dans le carrousel d'inspection (12), des électrodes, de préférence des électrodes de masse et des électrodes aiguilles (32, 34) respectivement associées, sont disposées, par le biais desquelles les produits (14) peuvent être contrôlés.

9. Dispositif selon l'une des revendications précédentes 5 à 8, **caractérisé en ce que** les éléments de retenue (24, 26) respectifs sont montés mobiles dans le carrousel d'inspection (12) par le biais d'un déplacement par came de levage.

10. Dispositif selon la revendication 9, **caractérisé en ce qu'**un premier déplacement par came de levage induit une avance des parties inférieures d'axe de rotation et un deuxième déplacement par came de levage induit une avance des parties supérieures d'axe de rotation.

11. Dispositif selon la revendication 10, **caractérisé en ce qu'**il y a un troisième déplacement par came de levage, qui permet un préréglage des parties supérieures d'axe de rotation en fonction de la taille du produit.

12. Dispositif selon l'une des revendications précédentes, **caractérisé en ce qu'**une vis transporteuse (16) est prévue, par le biais de laquelle les produits (14) sont amenés en position de réception verticale et une vis transporteuse (42) est prévue, par le biais de laquelle les produits (14) sont enlevés dans une position d'évacuation verticale.
